# EUROPÄISCHE PATENTANMELDUNG

(11) **EP 0 894 827 A1**
(43) Veröffentlichungstag der Anmeldung: **03.02.1999**
(21) Anmeldenummer: 98114033.8
(22) Anmeldetag: 28.07.1998
(51) Int. Cl.: C08L 27/06

(54) **Formmasse auf Basis von Polyvinylchlorid**

(30) Priorität: 31.07.1997 DE 19733078
(71) Anmelder: Granulat 2000 Kunstoff Compound GmbH & Co KG, 53842 Troisdorf (DE)
(72) Erfinder: Waeteraere, Friedhelm, 53773 Hennef (DE)
(74) Vertreter: Müller-Gerbes, Margot, Dipl.-Ing.

(57) **Zusammenfassung**

Die Erfindung betrifft eine Formmasse auf Basis von Polyvinylchlorid zum Herstellen von Formteilen durch thermoplastische Verarbeitung, wie Extrudieren, Spritzgießen, Walzen, enthaltend
Suspensions-, Emulsions- oder Masse-PVC mit einem K-Wert von 50 bis 70 sowie
2 bis zu 30 Gew.-%, bezogen auf den PVC-Gewichtsanteil Acrylnitrilstyrolacrylsäureester (ASA) als Modifiziermittel zur Verbesserung der Schlagzähigkeit und der Lichtbeständigkeit sowie
Zusatzstoffe in der bei der PVC-Verarbeitung üblichen Zugabemengen, wie Wärmestabilisatoren, Verarbeitungshilfsmittel, wie Gleitmittel, Füllstoffe, Farbmittel.

## Beschreibung

Die Erfindung betrifft eine Formmasse auf Basis eines Suspensions-, Emulsions- oder Masse-Polyvinylchlorids mit einem K-Wert von 50 bis 70 zum Herstellen von Formteilen durch thermoplastische Verarbeitung, wie Extrusion, Spritzgießen, Walzen.

PVC gehört zu den Thermoplasten mit hoher Festigkeit und einem hohen Elastizitätsmodul, jedoch geringer Abriebfestigkeit, geringer Dauerschwingfestigkeit, geringer Schlagzähigkeit und geringer Kerbschlagzähigkeit bei tieferen Temperaturen. Auch die Gebrauchstemperaturen sind relativ niedrig, kurzzeitig kann PVC bis zur ca. 75°C, langzeitig bis ca. 65°C beansprucht werden. Auch die Lichtbeständigkeit und die UV-Beständigkeit ist bei der Bewitterung ausgesetzten Formmassen glasklarer PVC-Typen begrenzt.

Es ist bekannt, die Eigenschaften von PVC-Formmassen durch Beigabe von Zusatzstoffen zu verbessern. Zur Vermeidung von thermischen Schädigungen werden dem PVC Stabilisatoren bei der thermischen Verarbeitung von scher- und temperaturempfindlichen PVC-Massen zugegeben. Es ist bekannt, dem PVC Lichtschutzmittel zur Vermeidung der Photooxidation des Polyvinylchlorids Gleitmittel zur Verbesserung der Verarbeitungsbedingungen und Beeinflussung von Oberflächen, hochpolymere PVC-Verarbeitungshilfsmittel zur Verbesserung der rheologischen Eigenschaften des PVC im thermoplastischen Zustand sowie zur Verbesserung der mechanischen Eigenschaften im thermoelastischen Zustand und zur Beeinflussung der Eigenschaften von PVC im Festzustand, Füllstoffe und Verstärkungsmittel sowie Farbmittel sowie weitere Hilfsstoffe, wie Antistatika oder Biostabilisatoren für spezielle Anwendungsgebiete zuzugeben. Es ist bekannt, zur Verbesserung der Schlagzähigkeit von PVC hochpolymere Additive zuzusetzen, insbesondere Ethylen-Vinylacetat, Copolymere, chloriertes Polyethylen, Acrylkautschuck, Polyacrylate, ABS-Polymere, Methylmethacrylat/Butadien/Styrol-Terpolymere (MBS). Bezüglich der bekannten Zusatzstoffe für die PVC-Verarbeitung und die Verbesserung der Eigenschaften von PVC wird auf das Taschenbuch der Kunststoff-Additive, herausgegeben von Dr. R. Gächter und Dr. H. Müller im Carl Hanser Verlag, München-Wien, 3. Ausgabe 1990 verwiesen.

Die Verbesserung der Schlagzähigkeit und Kerbschlagzähigkeit bei tiefen Temperaturen von PVC-Formmassen durch Zusatz von hochpolymeren Additiven ist bekannt, wobei zwei verschiedene Grundstrukturen der Beimischung von Hochpolymeren bekannt sind. Modifiziermittel, wie chloriertes Polyethylen und Ethylen-Vinylacetat-Copolymerisate, hüllen während der Verarbeitung die PVC-Partikel so ein, daß sie in der PVC-Matrix ein wabenförmiges Netzwerk bilden. Modifiziermittel, wie Methylmethacrylat/Butadien/Styrol/Copolymerisate und Polyacrylester behalten ihre eigenständige Idendität als kugelige in der PVC-Matrix verteilte Elastomerteilchen.

Aus der DE 40 35 480 A1 sind Polyvinylchloridharzmassen bekannt, bei denen als Verarbeitungshilfsmittel ein Emulsionspolymerisat, enthaltend 40 bis 95 Gew.-% Styrol, 4,5 bis 59,5 Gew.-% Acrylnitril und 0,5 bis 30 Gew.-% eines C.1. bis C.18.-Alkylacrylats und 0 bis 30 Gew.-% weiterer Co-Monomere als Verarbeitungshilfsmittel zugegeben werden. Hierbei werden die Verarbeitungshilfsmittel üblicherweise den PVC in Mengen zwischen 2 bis 5 Gew.-%, bezogen auf die Menge des PVC, zugegeben. Der Zusatz des Emulsionspolymerisates zu der Polyvinylchloridharzmasse gemäß DE 40 35 480 dient der Verkürzung der Gelierungs- und Plastifizierungszeiten der Polyvinylchloridharzmassen.

Aus der DE 195 08 934 A1 sind thermoplastische Formmassen bekannt, die schlagzäh modifizierte Thermoplaste, wie schlagzähe Polystyrole, schlagzähe PolyMethylmethacrylate, schlagzähe PVC-Produkte, Polycarbonate, Polyester, Polyamide u.a. enthalten, wobei ABS- und ASA-Polymerisate bevorzugt sind und die zwecks Ausbildung von matten Oberflächen der aus den thermoplastischen Formmassen herstellbaren Produkte mit einem thermoplastischen Polymerisat modifiziert werden, das sich aus 8 bis 80 Gew.-% mindestens eines Alkylacrylats mit 2 bis 20 C-Atomen im Alkylrest, 8 bis 80 Gew.-% Acrylnitril oder Methacrylnitril oder deren Mischungen und 0 bis 50 Gew.-% weiterer copolymerisierbarer Monomerer zusammensetzt.

Allerdings setzen die meisten üblicherweise eingesetzten Modifizierungsmittel die Lichtbeständigkeit des PVC weiter herab, so daß das zwar mit guten schlagzähen Eigenschaften ausgestattete sogenannte schlagzähe PVC eine geringere Lichtbeständigkeit aufweist als nichtschlagzähes PVC (ohne Modifizierungsmittel).

Der Erfindung liegt die Aufgabe zugrunde, nicht nur die Schlagzähigkeit und Kerbschlagzähigkeit einer PVC Formmasse durch geeignete Mittel zu verbessern, sondern auch deren Lichtbeständigkeit zu erhalten oder zu verbessern.

Die vorliegende Erfindung schlägt zur Lösung der gestellten Aufgabe eine Formmasse auf Basis eines Suspensions-, Emulsions- oder Masse-Polyvinylchlorids mit einem K-Wert von 50 bis 70 zum Herstellen von Formteilen durch thermoplastische Verarbeitung vor, enthaltend 2 bis 30 Gew.-% bezogen auf den PVC-Gewichtsanteil Acrylnitrilstyrolacrylsäureester (ASA) mit einer Zusammensetzung aus 50 bis 80 Gew.-% Acrylnitril und 50 bis 20 Gew.-% Styrol/Acrylsäureester, wobei das Verhältnis Styrol zu Acrylsäureester 1:1 bis 3:1 beträgt zur Verbesserung der Schlagzähigkeit, Kerbschlagzähigkeit und der Lichtbeständigkeit sowie Zusatzstoffe und Verarbeitungshilfsmittel in bei der PVC-Verarbeitung üblichen Zugabemengen.

Überraschend wurde erkannt, daß durch Zugabe eines erfindungsgemäß ausgewählten hochpolymeren Modifizierungsmittels gleichzeitig sowohl die Schlagzähigkeit und Kerbschlagzähigkeit der PVC-Formmasse bei tiefen Temperaturen als auch die Lichtbeständigkeit verbessert werden können. Überraschend wurde die Lichtbeständigkeit der PVC-Formmasse nicht durch das erfindungsgemäße ausgewählte ASA beeinträchtigt.

Bei einer bevorzugten Zusammensetzung der Formmasse werden 5 bis 20 Gew.-% bzw. in einer weiter bevorzugten Auswahl 8 bis 15 Gew.-% Acrylnitrilstyrolacrylsäureester, bezogen auf den PVC-Gew.-Anteil, eingesetzt.

Als Acrylsäureester sind Acrylate, wie Methylacrylat, Ethylacrylat, n-Butylacrylat, i-Butylacrylat, 2-Ethylhexylacrylat, bevorzugt.

Die erfindungsgemäßen Formmassen auf Basis von Homopolymerisat des PVC eignen sich insbesondere zur Herstellen von PVC-Hart-Formteilen durch thermoplastische Verarbeitung, wie Extrudieren, Spritzgießen, Walzen in Gestalt von Halbzeugen und Fertigprodukten. Die erfindungsgemäße Formmasse läßt sich besonders gut zu einem Granulat compoundieren, das dann den Verarbeitungsmaschinen, wie Extrudern, zur weiteren Plastifizierung und Verarbeitung zu gewünschten Produkten zugeführt wird.

Die erfindungsgemäßen PVC-Formmassen können des weiteren Zusatzstoffe enthalten, wie sie für PVC-Formmassen üblich sind. Als solche seien beispielsweise benannt Stabilisatoren, Antioxidanzien, UV-Absorber, Farbstoffe, Pigmente, Flammschutzmittel, Gleitmittel, Antistatika, Fungizide. Des weiteren können den PVC-Formmassen Füllstoffe, wie Kreide, zugegeben werden.

Als Wärmestabilisatoren kommen die bekannten PVC-Stabilisatoren auf Basis von Zink, Calcium, Barium, Zinn, Blei in Frage, wie Organo-Zinnstabilisatoren, Metallcarboxylatstabilisatoren, Barium/Cadmiumstabilisatoren, Barium/Zinkstabilisatoren, Calcium/Zinkstabilisatoren, Bleistabilisatoren.

Als Gleitmittel kommen beispielsweise Montanwachs, natürliche und synthetische Paraffine zum Einsatz.

Die Erfindung wird nachfolgend an zwei Beispielen 1, 3 und Beispiel 2, 4 als Vergleichsbeispiele veranschaulicht. Bei den erfindungsgemäßen Beispielen 1, 3 wird als Modifizierungsmittel ein Acrylnitrilstyrolacrylsäureester - ASA - eingesetzt und bei dem Vergleichsbeispiel 2, 4 wird als Modifizierungsmittel ein bekannter bewährter Polyacrylsäureester eingesetzt. Die Angaben beziehen sich jeweils auf 100 Gew.-Teile aus PVC und Modifizierungsmittel.

Aus den Formmassen wurden Probestäbchen hergestellt, an denen nachfolgend die Eigenschaftswerte, und zwar die Kerbschlagzähigkeit und die UV-Beständigkeit bzw. Lichtbeständigkeit im Xenotest gemessen wurden. Die Ergebnisse der Beurteilung und Messungen zeigen, daß die erfindungsgemäße Formmasse mit einem Modifizierungsmittel auf Basis ASA eine überraschend verbesserte Kerbschlagzähigkeit und eine sehr gute Lichtbeständigkeit und UV-Beständigkeit aufweist gegenüber den bekannten PVC-Formmassen, enthaltend Polyacrylsäureester als Modifizierungsmittel.

| Beispiele | 1 Gew.-Teile | 2 Gew.-Teile |
|---|---|---|
| Suspensions-PVC, K-Wert 50 | 90 | 90 |
| ASA, enthaltend - 55 Gew.-% Acrylnitril - 45 Gew.-% Styrol/Acrylsäureester Verhältnis 2,5 : 1 | 10 | - |
| Polyacrylsäureester | - | 10 |
| Butyl-Zinn-Stabilisator | 2 | 2 |
| Methylmethacrylat-Acrylat Copolymer als Verarbeitungshilfsmittel | 1,5 | 1,5 |
| Neutrales Esterwachs als Gleitmittel | 1 | 1 |
| C. I. Pigment Brown 24 | 1,5 | 1,5 |
| **Eigenschaftswerte** | | |
| Kerbschlagzähigkeit bei 23°C (kJ/m²) DIN EN ISO 179 | 12 | 10 |
| Verfärbung nach Xenotest (Energiedosis: 100 000 kJ/m²) | sehr schwach | sehr stark |

| Beispiel | 3 | 4 |
|---|---|---|
| Suspensions-PVC, K-Wert 60 | 88 | 88 |
| ASA - 55 Gew.-% Acrylnitril - 45 Gew.-% Styrol/Acrylsäureester Verhältnis 2,5 : 1 | 12 | - |
| Polyacrylsäureester | - | 12 |
| Zweibasisches Bleiphosphit | 3 | 3 |
| Zweibasisches Bleistearat | 1 | 1 |
| Methylmethacrylat-Acrylat Copolymer als Verarbeitungshilfsmittel | 1,5 | 1,5 |
| Neutrales Esterwachs als Gleitmittel | 1 | 1 |
| C.I. Pigment Yellow 34 | 0,75 | 0,75 |
| C.I. Pigment Red 101 | 0,75 | 0,75 |
| **Eigenschaftswerte** | | |
| Kerbschlagzähigkeit bei 23°C (kJ/m²) DIN EN ISO 179 | 20 | 20 |
| Verfärbung nach Xenotest (Energiedosis: 100 000 kJ/m²) | sehr schwach | stark |

## Patentansprüche

1. Formmasse auf Basis eines Suspensions-, Emulsions- oder Masse-Polyvinylchlorids mit einem K-Wert von 50 bis 70 zum Herstellen von Formteilen durch thermoplastische Verarbeitung, wie Extrusion, Spritzgießen, Walzen, enthaltend
2 bis zu 30 Gew.-%, bezogen auf den PVC-Gewichtsanteil Acrylnitrilstyrolacrylsäureester mit einer Zusammensetzung aus 50 bis 80 Gew.-% Acrylnitril und 50 bis 20 Gew.-% Styrol/Acrylsäureester, letztere im Verhältnis von 1 :1 bis 3 : 1 als Modifiziermittel zur Verbesserung der Schlagzähigkeit, Kerbschlagzähigkeit und Lichtbeständigkeit sowie
Zusatzstoffe und Verarbeitungshilfsmittel in bei der PVC-Verarbeitung üblichen Zugabemengen.

2. Formmasse nach Anspruche 1,
**dadurch gekennzeichnet,** daß 5 bis 20 Gew.-%
Acrylnitrilstyrolacrylsäureester, bezogen auf den PVC-Gewichtsanteil enthalten sind.
